# EUROPÄISCHE PATENTSCHRIFT

(11) **EP 2 202 762 B1**
(45) Veröffentlichungstag und Bekanntmachung des Hinweises auf die Patenterteilung: **09.02.2011**
(21) Anmeldenummer: 08291180.1
(22) Anmeldetag: 15.12.2008
(51) Int. Cl.: H01B 12/02

(54) **Anordnung mit einem supraleitfähigen Kabel**
Arrangement with a superconducting cable
Dispositif comprenant un câble supraconducteur

(43) Veröffentlichungstag der Anmeldung: 30.06.2010
(73) Patentinhaber: Nexans, 75008 Paris (FR)
(72) Erfinder: Soika, Rainer, 30559 Hannover (DE); Stemmle, Mark, D-30161 Hannover (DE)
(74) Vertreter: Döring, Roger

(56) Entgegenhaltungen:
- WO-A-03/052775
- US-A1- 2006 211 579

## Beschreibung

Die Erfindung bezieht sich auf eine Anordnung mit einem supraleitfähigen Kabel, welches aus einem supraleitfähigen Leiter und einem denselben unter Zwischenschaltung eines Dielektrikums konzentrisch umgebenden supraleitfähigen Schirm besteht und welches unter Einschluß eines Freiraums zum Durchleiten eines Kühlmittels von einem Kryostat umgeben ist, der aus zwei konzentrisch zueinander angeordneten metallischen Rohren besteht, zwischen denen eine Vakuumisolierung angeordnet ist (WO 03/052775 A1).

Ein supraleitfähiges Kabel hat in heutiger Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise YBCO (Yttrium-Barium-Kupfer-Oxid) oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe.

In der Anordnung nach der eingangs erwähnten WO 03/052775 A1 wird ein supraleitföhiges Kabel mit kaltem Dielektrikum eingesetzt. Es besteht aus einem auf einen rohrförmigen Träger aufgebrachten Innenleiter und einem konzentrisch dazu angeordneten Schirm, die durch das Dielektrikum (Isolierung) voneinander getrennt und auf Abstand gehalten sind. Der Leiter und der Schirm bestehen beispielsweise aus Bändern aus supraleitfähigem Material, wie YBCO oder BSCCO, die dicht nebeneinander liegend mit langem Schlag um eine Unterlage herumgewickelt sind. Dieses bekannte supraleitfähige Kabel ist so aufgebaut, daß der supraleitfähige Schirm das Magnetfeld des supraleitfähigen Leiters im ungestörten Betrieb nach außen abschirmt. Im Falle eines Kurzschlusses ändert sich die Kabelimpedanz nur unwesentlich. Aufgrund des Kurzschlußstroms erfolgt ein hoher Energieeintrag, und zwar sowohl in den Leiter als auch in den Schirm des Kabels, der zur Zerstörung des Kabels (burn-out) führen kann.

Der Erfindung liegt die Aufgabe zugrunde, die eingangs geschilderte Anordnung so zu gestalten, daß die Auswirkungen eines Kurzschlusses wesentlich vermindert werden können.

Diese Aufgabe wird gemäß der Erfindung dadurch gelöst, daß der Schirm aus einem supraleitfähigen Material besteht, dessen elektrischer Widerstandswert im normal leitenden Zustand um einen Faktor von mindestens 50 höher ist als der elektrische Widerstandswert des für den Leiter verwendeten Materials in normal leitendem Zustand.

Im Falle eines Kurzschlusses kommt es im Kabel durch den Energieeintrag zu einer Temperaturerhöhung. Aufgrund dieser Temperaturerhöhung und des den Bemessungsstrom übersteigenden Kurzschlußstroms, kommt es zu einem Übergang der supraleitfähigen Materialien von Leiter und Schirm aus ihrem supraleitenden Zustand in den normal leitenden Zustand. Wegen seines hohen elektrischen Widerstandswerts führt der Schirm dann einen zu vernachlässigenden Strom, so daß er seine Schirmwirkung verliert. Das Magnetfeld des Leiters kann sich dadurch quasi ungehindert ausbreiten. Das bewirkt direkt eine wesentliche Erhöhung der Induktivität des Leiters, also eine Erhöhung seiner elektrischen Impedanz. Der über den Leiter fließende Kurzschlußstrom wird dadurch merklich und schnell begrenzt. Die bei bekannten Kabeln durch einen hohen Kurzschlußstrom auftretende Erwärmung ist dementsprechend vermindert.

Der Effekt der Begrenzung des Kurzschlußstroms kann durch die zusätzliche Anbringung einer Schicht aus ferromagnetischem Material außerhalb des Schirms erhöht werden. Für eine solche Schicht einsetzbare ferromagnetische Materialien sind alle Materialien, die eine relative Permeabilität µᵣ größer 10 aufweisen. Die außerhalb des Schirms angeordnete Schicht aus ferromagnetischem Material gelangt im Falle eines Kurzschlusses in das vom Leiter des Kabels erzeugte Magnetfeld und bewirkt eine weitere Erhöhung der Induktivität des Leiters, also eine weitere Erhöhung seiner elektrischen Impedanz. Dieser Effekt der Schicht aus ferromagnetischem Material wird durch in derselben entstehende Ummagnetisierungsverluste weiter erhöht, wenn das supraleitfähige Kabel ein Wechselstromkabel ist. Das ferromagnetische Material schirmt außerdem das Magnetfeld des Leiters des Kabels nach außen ab. Elektromagnetische Störungen für außerhalb des Kryostats befindliche Aggregate können also kaum auftreten. Außerdem werden auf naheliegende andere Kabelphasen einwirkende Kräfte reduziert.

Die Schicht aus ferromagnetischem Material kann am äußeren Umfang des Kryostats angeordnet werden. Dabei kann mit Vorteil das außen liegende Rohr des Kryostats selbst aus dem ferromagnetischen Material bestehen. Als ferromagnetisches Material wird vorzugsweise ein Material mit einer hohen relativen Permeabilität µᵣ verwendet. Es kann sowohl ein Material mit hohen Hytereseverlusten als auch ein Material mit geringen Hystereseverlusten zum Einsatz kommen, abhängig vom gewünschten Kabelverhalten im Kurzschlußstromfall. Die Schicht aus ferromagnetischem Material ist wie alle metallischen Materialien auch elektrisch leitfähig. Sie kann daher unter der Wirkung eines vom Leiter des Kabels gegebenenfalls ausgehenden magnetischen Wechselfeldes durch magnetische Hysterese und durch Wirbelströme erwärmt werden. Diese Erwärmung tritt aber bei der bevorzugten Ausführungsform der Anordnung außerhalb des Kryostats auf, so daß das Kabel selbst sowie das Kühlmedium hierdurch nicht erwärmt werden. Aufgrund der damit geringen Erwärmung sind die Rückkühlzeiten vermindert, so daß das Kabel schneller wieder einsatzfähig ist. Die geringere Erwärmung bedeutet auch geringere mechanische Beanspruchung der verschiedenen Komponenten der Anordnung. Schließlich bleibt auch das Kühlmittel von der Erwärmung der ferromagnetischen Schicht unberührt. Da außerdem wegen des reduzierten Kurzschlußstroms nur eine geringe Kühlleistung benötigt wird, kann bei dieser bevorzugten Ausführungsform der Anordnung auch die Auslegung der Kühlanlage vereinfacht werden.

Wenn für die Schicht aus ferromagnetischem Material ein Material mit sehr geringen Hystereseverlusten eingesetzt wird, dann wird die Schicht durch ein gegebenenfalls vom Leiter des Kabels erzeugtes Wechselfeld nur unwesentlich erwärmt. Ein solches Material hat mit Vorteil eine hohe relative Permeabilität µᵣ. Die Schicht aus ferromagnetischem Material kann insbesondere bei einem solchen Material auch innerhalb des Kryostats angeordnet werden. Sie kann dann beispielsweise den Schirm des Kabels direkt umgeben. Es könnte bei dieser Ausführungsform des Kabels auch das innere Rohr des Kryostats aus dem ferromagnetischen Material bestehen.

Ausführungsbeispiele des Erfindungsgegenstandes sind in den Zeichnungen dargestellt.

Es zeigen:

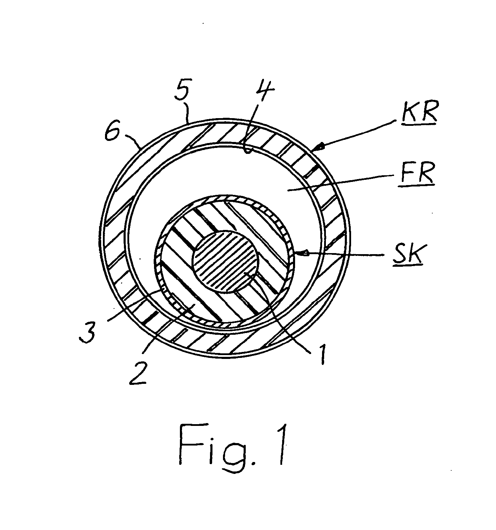

Fig. 1 bis 3 Querschnitte durch drei unterschiedlich aufgebaute Anordnungen nach der Erfindung in schematischer Darstellung.

Die Anordnung besteht gemäß Fig. 1 aus einem supraleitfähigen Kabel SK und einem dasselbe umgebenden Kryostat KR. Der Kryostat KR schließt außerdem einen Freiraum FR ein, durch welchen beim Betrieb der Anordnung ein Kühlmittel geleitet wird, beispielsweise Stickstoff.

Das supraleitfähige Kabel SK besteht aus einem supraleitfähigen Leiter 1, einem denselben umgebenden, als Isolierung wirkenden Dielektrikum 2 und einem über dem Dielektrikum 2 angeordneten supraleitfähigen Schirm 3.

Der Kryostat KR ist aus zwei konzentrisch zueinander angeordneten, metallischen Rohren 4 und 5 aufgebaut, die vorzugsweise aus Stahl bestehen und zur Verbesserung der Biegbarkeit des Kryostats KR quer zu ihrer Längsrichtung gewellt sein können. Zwischen dem inneren Rohr 4 und dem äußeren Rohr 5 des Kryostats KR ist in bekannter Technik eine Vakuumisolierung 6 angebracht.

Der Leiter 1 und der Schirm 3 weisen supraleitfähige Materialien auf. Sie sind bei entsprechender Kühlung während des Betriebs des Kabels SK im supraleitenden Zustand. Die Materialien von Leiter 1 und Schirm 3 sind jedoch unterschiedlich, und zwar derart, daß im normalleitenden Zustand das Material des Schirms einen um einen Faktor von mindestens 50 größeren elektrischen Widerstandswert hat als das Material des Leiters 1.

In diesem Sinne besteht der Schirm 3 größtenteils mit Vorteil aus einem mit seltenen Erden dotierten, oxidischen supraleitfähigen Material. Ein solches Material ist unter der Bezeichnung ReBCO (Rare-earth-Barium-Kupfer-Oxid) bekannt. Ein vorzugsweise für den Schirm 3 eingesetztes Material ist YBCO.

Der Leiter 1 besteht mit Vorteil aus BSSCO und gegebenenfalls aus einer elektrischen sowie mechanischen Stabilisierung aus Kupfer. Wegen des hohen Silberanteils im BSSCO hat der Leiter 1 im normalleitenden Zustand einen gegenüber dem Schirm 3 wesentlich geringeren elektrischen Widerstandswert. Dieser Effekt ist auch dann erreichbar, wenn für den Leiter 1 eine Kombination aus ReBCO, vorzugsweise YBCO, und Kupfer eingesetzt wird.

Durch die unterschiedlichen Materialien für Leiter 1 und Schirm 3 ergibt sich folgende Funktion der Anordnung nach der Erfindung:

Im Falle eines Kurzschlusses verliert der Schirm 3 des Kabels SK seine abschirmende Funktion weitestgehend. Das vom Leiter 1 des Kabels SK erzeugte Magnetfeld kann sich dadurch nahezu ungehindert ausbreiten und bewirkt direkt eine wesentliche Erhöhung der Induktivität des Leiters 1, also eine Erhöhung seiner elektrischen Impedanz. Der über den Leiter 1 fließende Kurzschlußstrom wird dadurch merklich und schnell begrenzt. Die durch den Kurzschlußstrom erzeugte Erwärmung des Kabels SK und seiner Umgebung wird also relativ niedrig gehalten, so daß der Energieaufwand für die Rückkühlung der Anordnung nach Behebung des Kurzschlusses relativ gering ist.

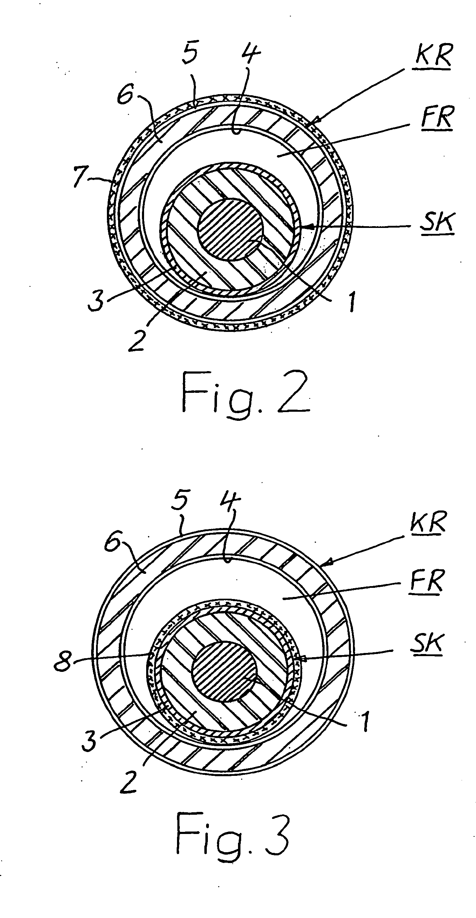

Das Kabel SK kann gemäß den Fig. 2 und 3 zusätzlich eine Schicht aus ferromagnetischem Material aufweisen, die außerhalb des Schirms 3 angeordnet ist:

Gemäß Fig. 2 ist über dem äußeren Rohr 5 des Kryostats KR eine rohrförmig geschlossene Schicht 7 aus ferromagnetischem Material angebracht. Sie ist auf der ganzen Länge der Anordnung vorhanden und umgibt das Rohr 5 an seinem Umfang rundum. Die Schicht 7 ist also eine rohrförmig geschlossene Hülle. Sie gelangt im Falle eines Kurzschlusses in das vom Leiter 1 des Kabels SK erzeugte Magnetfeld und bewirkt dadurch eine zusätzliche Erhöhung der Induktivität des Leiters 1, also eine weitere Erhöhung seiner elektrischen Impedanz. Die weiter oben erläuterten Wirkungen werden durch die Schicht 7 aus ferromagnetischem Material also verstärkt.

Wenn das supraleitfähige Kabel SK ein Wechselstromkabel ist, kann der den Kurzschlußstrom begrenzende Effekt durch in der Schicht 7 aus ferromagnetischem Material gegebenenfalls entstehende Ummagnetisierungsverluste weiter erhöht werden.

Die Schicht 7 kann aus einem Band aus ferromagnetischem Material, wie beispielsweise Magneperm, aufgebaut sein, das mit überlappenden Kanten um das Rohr 5 herumgewickelt ist. Dieses Material hat eine relative Permeabilität von µᵣ = 450.000 bei 50 Hz. Die Schicht 7 könnte auch aus einem längseinlaufenden Band eines derartigen Materials hergestellt sein, welches das Rohr 5 mit einer in Längsrichtung verlaufenden Überlappungsstelle rundum umgibt.

Die Wandstärke der Schicht aus ferromagnetischem Material ist mit Vorteil größer als 0,1 mm. Die relative Permeabilität µᵣ des ferromagnetischen Materials ist größer als 10.

Ferromagnetische Materialien zeichnen sich allgemein durch eine hohe relative Permeabilität µᵣ aus. Unabhängig davon haben ferromagnetische Materialien Hystereseverluste, die durch die umschlossene Fläche im B-H-Diagramm gegeben sind. Beide Größen sind vom verwendeten Material abhängig. Es besteht keine Korrelation zwischen µᵣ und den Hystereseverlusten.

Statt einer gesonderten bzw. zusätzlichen Schicht 7 kann in einer abgewandelten Ausführungsform der Anordnung nach Fig. 2 auch das äußere Rohr 5 des Kryostats KR selbst aus ferromagnetischem Material bestehen, beispielsweise aus einem Stahl mit einer relativen Permeabilität von µᵣ = 1.000 bei 50 Hz. Geeignet sind auch Legierungen aus Nickel und Eisen mit weiteren Beimischungen in geringen Mengen.

Wichtig ist, daß die Schicht aus ferromagnetischem Material in allen Ausführungsformen als rundum geschlossene Schicht außerhalb des supraleitfähigen Schirms 3 angeordnet ist, damit sie im Kurzschlußfall im Magnetfeld des Leiters 1 liegt. Sie kann dementsprechend gemäß Fig. 3 auch innerhalb des Kryostats KR angeordnet sein und als Schicht 8 beispielsweise außen am Schirm 3 anliegen. Für die Schicht 8 wird - wie bereits erwähnt- mit Vorteil ein Material mit sehr geringen Hystereseverlusten eingesetzt, so daß dieselbe im Kurzschlußfall nur unwesentlich erwärmt wird. Die Schicht 8 kann dann an das gleiche Potential wie der Schirm 3 angeschlossen sein. Statt der gesonderten Schicht 8 kann - analog zu Fig. 1 - auch das innere Rohr 4 des Kryostats KR aus ferromagnetischem Material hergestellt sein. Auch bei dieser Ausführungsform der Anordnung mit innerhalb des Kryostats KR liegendem ferromagnetischem Material ergibt sich die Begrenzung des im Leiter 1 fließenden Kurzschlußstroms, so wie es für die Anordnung nach Fig. 1 beschrieben ist.

## Patentansprüche

1. Anordnung mit einem supraleitfähigen Kabel (SK), welches aus einem supraleitfähigen Leite (1) und einem denselben unter Zwischenschaltung eines Dielektrikums (2) konzentrisch umgebenden supraleitfähigen Schirm (3) besteht und welches unter Einschluß eines Freiraums (FR) zum Durchleiten eines Kühlmittels von einem Kryostat umgeben ist, der aus zwei konzentrisch zueinander angeordneten metallischen Rohrer (4,5) besteht, zwischen denen eine Vakuumisolierung (6) angeordnet ist, **dadurch gekennzeichnet, daß** der Schirm (3) aus einem supraleitfähigen Material besteht, dessen elektrischer Widerstandswert im normal leitenden Zustand um einen Faktor von mindestens 50 höher ist als der elektrische Widerstandswert des für den Leiter (1) verwendeten Materials in normal leitendem Zustand.

2. Anordnung nach Anspruch 1, **dadurch gekennzeichnet, daß** der Schirm (3) aus einem mit seltenen Erden dotierten, oxidischen supraleitfähigen Material besteht.

3. Anordnung nach Anspruch 2, **dadurch gekennzeichnet, daß** der Schirm (3) aus YBCO besteht.

4. Anordnung nach Anspruch 1, **dadurch gekennzeichnet; daß** der Leiter (1) aus BSSCO besteht, vorzugsweise mit einer Stabilisierung aus Kupfer.

5. Anordnung nach Anspruch 1, **dadurch gekennzeichnet, daß** der Leiter (1) aus einer Kombination von ReBCO und Kupfer besteht.

6. Anordnung nach Anspruch 5, **dadurch gekennzeichnet, daß** der Leiter (1) aus einer Kombination von YBCO und Kupfer besteht.

7. Anordnung nach einem der Ansprüche 1 bis 6, **dadurch gekennzeichnet, daß** außerhalb des Schirms (3) auf der ganzen Länge des Kabels (SK) zusätzlich eine rohrförmig geschlossene Schicht (7,8) aus ferromagnetischem Material vorhanden ist.

8. Anordnung nach Anspruch 7, **dadurch gekennzeichnet, daß** die relative Permeabilität des ferromagnetischen Materials größer 10 ist.

9. Anordnung nach Anspruch 7 oder 8, **dadurch gekennzeichnet, daß** die Schicht (7) aus ferromagnetischem Material außen auf das äußere Rohr (5) des Kryostats (KR) aufgetragen ist.

10. Anordnung nach Anspruch 7 oder 8, **dadurch gekennzeichnet, daß** das äußere Rohr (5) des Kryostats (KR) aus ferromagnetischem Material besteht.

11. Anordnung nach Anspruch 7 oder 8, **dadurch gekennzeichnet, daß** das ferromagnetische Material innerhalb des Kryostats (KR) angeordnet ist.

12. Anordnung nach Anspruch 11, **dadurch gekennzeichnet, daß** eine Schicht (8) aus ferromagnetischem Material außen auf den Schirm (3) aufgetragen ist.

13. Anordnung nach Anspruch 11, **dadurch gekennzeichnet, daß** das innere Rohr (4) des Kryostats (KR) aus ferromagnetischem Material besteht.

## Claims

1. Arrangement having a superconducting cable, which comprises a superconducting conductor and a superconducting screen which concentrically surrounds the same with the interposition of a dielectric, which cable is surrounded by a cryostat, enclosing a free space for a coolant to be passed through, which cryostat comprises two metallic tubes which are arranged concentrically with respect to one another and between which vacuum insulation is arranged, **characterized in that** the screen (3) is composed of a superconducting material whose electrical resistance value in the normally conductive state is greater by a factor of at least 50 than the electrical resistance value of the material used for the conductor (1) in the normally conductive state.

2. Arrangement according to Claim 1, **characterized in that** the screen (3) is composed of an oxidic superconducting material doped with rare earths.

3. Arrangement according to Claim 2, **characterized in that** the screen (3) is composed of YBCO.

4. Arrangement according to Claim 1, **characterized in that** the conductor (1) is composed of BSSCO, preferably with stabilization composed of copper.

5. Arrangement according to Claim 1, **characterized in that** the conductor (1) is composed of a combination of ReBCO and copper.

6. Arrangement according to Claim 5, **characterized in that** the conductor (1) is composed of a combination of YBCO and copper.

7. Arrangement according to one of Claims 1 to 6, **characterized in that** a layer (7, 8) which is closed in the form of a tube and is composed of ferromagnetic material is additionally provided outside the screen (3) over the entire length of the cable (SK).

8. Arrangement according to Claim 7, **characterized in that** the relative permeability of the ferromagnetic material is greater than 10.

9. Arrangement according to Claim 7 or 8, **characterized in that** the layer (7) composed of ferromagnetic material is applied externally to the outertube (5) of the cryostat (KR).

10. Ana nge me nt according to Claim 7 or 8, **characterized in that** the outer tube (5) of the cryostat (KR) is composed of ferromagnetic material.

11. Arrangement according to Claim 7 or 8, **characterized in that** the ferromagnetic material is arranged within the cryostat (KR).

12. Arrangement according to Claim 11, **characterized in that** a layer (8) composed of ferromagnetic material is applied externally to the screen (3).

13. Arrangement according to Claim 11, **characterized in that** the inner tube (4) of the cryostat (KR) is composed of ferromagnetic material.

## Revendications

1. Arrangement comprenant un câble supraconducteur (SK), lequel se compose d'un conducteur supraconducteur (1) et d'un blindage supraconducteur (3) qui entoure celui-ci de manière concentrique en intercalant un diélectrique (2) et lequel est entouré par un cryostat incluant un espace libre (FR) pour laisser passer un fluide réfrigérant, ledit cryostat se composant de deux tubes métalliques (4, 5) disposés de manière concentrique l'un par rapport à l'autre et entre lesquels se trouve une isolation par vide (6), **caractérisé en ce que** le blindage (3) se compose d'un matériau supraconducteur dont la valeur de la résistance électrique à l'état de conduction normale est supérieure d'au moins un facteur 50 à la valeur de la résistance électrique du matériau utilisé pour le conducteur (1) à l'état de conduction normale.

2. Arrangement selon la revendication 1, **caractérisé en ce que** le blindage (3) se compose d'un matériau supraconducteur oxydique dopé aux terres rares.

3. Arrangement selon la revendication 2, **caractérisé en ce que** le blindage (3) se compose d'YBCO.

4. Arrangement selon la revendication 1, **caractérisé en ce que** le conducteur (1) se compose de BSSCO, de préférence avec un stabilisant en cuivre.

5. Arrangement selon la revendication 1, **caractérisé en ce que** le conducteur (1) se compose d'une combinaison de ReBCO et de cuivre.

6. Arrangement selon la revendication 5, **caractérisé en ce que** le conducteur (1) se compose d'une combinaison d'YBCO et de cuivre.

7. Arrangement selon l'une des revendications 1 à 6, **caractérisé en ce qu'**il existe en plus une couche (7, 8) fermée tubulaire en matériau ferromagnétique à l'extérieur du blindage (3) sur toute la longueur du câble (SK).

8. Arrangement selon la revendication 7, **caractérisé en ce que** la perméabilité relative du matériau ferromagnétique est supérieure à 10.

9. Arrangement selon la revendication 7 ou 8, **caractérisé en ce que** la couche (7) en matériau ferromagnétique est appliquée à l'extérieur sur le tube extérieur (5) du cryostat (KR).

10. Arrangement selon la revendication 7 ou 8, **caractérisé en ce que** le tube extérieur (5) du cryostat (KR) se compose de matériau ferromagnétique.

11. Arrangement selon la revendication 7 ou 8, **caractérisé en ce que** le matériau ferromagnétique est disposé à l'intérieur du cryostat (KR).

12. Arrangement selon la revendication 11, **caractérisé en ce qu'**une couche (8) en matériau ferromagnétique est appliquée à l'extérieur sur le blindage (3).

13. Arrangement selon la revendication 11, **caractérisé en ce que** le tube intérieur (4) du cryostat (KR) se compose de matériau ferromagnétique.
